# EUROPÄISCHE PATENTSCHRIFT

(11) **EP 4 320 418 B1**
(45) Veröffentlichungstag und Bekanntmachung des Hinweises auf die Patenterteilung: **26.11.2025**
(21) Anmeldenummer: 22721332.9
(22) Anmeldetag: 07.04.2022
(51) Int. Cl.: G01M 13/027

(54) **PRÜFSTAND FÜR EINEN ANTRIEBSSTRANG EINES KRAFTFAHRZEUGS**
TEST STAND FOR A DRIVE TRAIN OF A MOTOR VEHICLE
BANC D'ESSAI POUR UNE CHAÎNE CINÉMATIQUE D'UN VÉHICULE AUTOMOBILE

(30) Priorität: 08.04.2021 DE 102021203479
(43) Veröffentlichungstag der Anmeldung: 14.02.2024
(73) Patentinhaber: ZF Friedrichshafen AG, 88046 Friedrichshafen (DE)
(72) Erfinder: HELL, Christian, 94107 Untergriesbach (DE); DOLLINGER, Thomas, 94036 Passau (DE)
(74) Vertreter: ZF Friedrichshafen AG
(86) Internationale Anmeldenummer: PCT/EP2022/059228
(87) Internationale Veröffentlichungsnummer: WO 2022/214582

(56) Entgegenhaltungen:
- EP-A2- 1 519 182
- WO-A1-2013/135246
- WO-A1-85/04475
- AT-A1- 512 006
- DE-A1- 10 021 906
- US-A1- 2014 033 831

## Beschreibung

Die Erfindung betrifft einen Prüfstand für einen Antriebsstrang eines Kraftfahrzeugs gemäß dem Oberbegriff von Anspruch 1.

Getriebeprüfstände bzw. Antriebsstrangprüfstände zum Prüfen von Kraftfahrzeuggetrieben bzw. von vollständigen Kraftfahrzeugantriebssträngen sind aus dem Stand der Technik bekannt. Derartige Prüfstände werden üblicherweise zur Qualitätskontrolle verwendet, um Funktionsstörungen in Antriebssträngen frühzeitig durch eine Reihe von Belastungstests zu erkennen. Typische Funktionsstörungen entstehen z.B. durch spielbehaftete Bauteile, wie z. B. Zahnräder, Synchronringe, Synchronkörper, Lamellenkupplungsscheiben und Wellen, die ausgelenkt und zu Schwingungen angeregt werden können. Im Rahmen einer derartigen Funktionserprobung werden in der Regel auch das Akustikverhalten und die Schaltqualität geprüft. Darüber hinaus finden derartige Prüfstände aber auch in der Entwicklung und stetigen Verbesserung von Kraftfahrzeugantriebssträngen Verwendung.

In diesem Zusammenhang beschreibt die DE 43 28 537 C2 einen Getriebeprüfstand mit einem ersten, als Antriebsmotor dienenden Servomotor und einem zweiten, als Bremsmotor dienenden Servomotor. Der Antriebsmotor ist über eine Kupplung mit der Antriebswelle eines zu prüfenden Kraftfahrzeuggetriebes verbunden und wird u.a. hinsichtlich seiner Drehzahl über einen PC gesteuert, so dass beliebige Drehzahlverläufe simulierbar sind. Der Bremsmotor ist über eine weitere Kupplung mit einer Abtriebswelle des zu prüfenden Kraftfahrzeuggetriebes verbunden. Auch die Drehzahl des Bremsmotors wird über den PC gesteuert. Bei den vom PC simulierten Drehzahlverläufen handelt es sich um in realen Fahrversuchen gemessene Drehzahlverläufe. Somit kann das Kraftfahrzeuggetriebe gemäß der DE 43 28 537 C2 vor dem Einbau in ein Kraftfahrzeug geprüft werden.

Die DE 103 28 461 A1 offenbart einen Fahrzeugprüfstand mit einer Belastungsmaschine für jedes antreibbare Rad eines Kraftfahrzeugs. Die Belastungsmaschinen sind dabei direkt, beispielsweise über Radbolzen, oder indirekt, beispielsweise über einen Riementrieb, mit den Felgen der Kraftfahrzeugräder verbunden, so dass die Belastungsmaschinen den Antriebsstrang sowohl antreiben als auch bremsen können. Der Fahrzeugprüfstand der DE 103 28 461 A1 umfasst weiterhin eine Rahmenkonstruktion, über welche das Kraftfahrzeug und die Belastungsmaschinen angehoben und zueinander ausgerichtet werden können. Während des Prüfvorgangs wird das Kraftfahrzeug vollständig von der Rahmenkonstruktion getragen, so dass die Fahrzeugräder keinen Bodenkontakt haben.

Die US 2014/033831 A1 offenbart dabei ein Rotationstorsionsprüfgerät, das dazu ausgebildet ist, einen Prüfling zu drehen und gleichzeitig mit einem Drehmoment zu beaufschlagen. Das Rotationstorsionsprüfgerät umfasst eine erste Antriebswelle, eine zweite Antriebswelle, eine Lastanwendungseinheit, die eine Torsionslast auf ein Werkstück ausübt, mindestens eine Lagereinheit, eine Rotationsantriebseinheit mit einem ersten Elektromotor, der die zweite Antriebswelle und die Lastanwendungseinheit so antreibt, dass sie phasengleich rotieren, und einen Drehmomentsensor, der die Torsionslast erkennt. Die Lastanwendungseinheit umfasst ihrerseits einen zweiten Elektromotor, der die erste Antriebswelle antreibt, und dazu ausgebildet ist, eine Phasendifferenz zwischen der ersten Antriebswelle und der zweiten Antriebswelle herzustellen. Der Drehmomentsensor umfasst einen Dehnungsmessstreifen, um die Torsionslast zu erkennen.

Die AT 512 006 A1 beschreibt dabei im Einzelnen eine Vorrichtung für ein Prüfrad zum Prüfen des Antriebsstrangs eines Fahrzeugs, wobei das Prüfrad eine Radnabe, die drehfest mit einer Seitenwelle des Fahrzeugs verbindbar ist, und einen Radkranz, der in einer Prüfstellung drehbar mit der Radnabe verbunden ist, aufweist. Eine Sperre ist derart an der Radnabe und dem Radkranz montierbar, dass in einer montierten Sperrstellung die drehbare Verbindung zwischen der Radnabe und dem Radkranz gesperrt ist.

Die WO 85/04475 A1 offenbart eine Vorrichtung zur Leistungsprüfung von Kraftfahrzeugen auf einem Leistungsprüfstand, umfassend eine Lastaufnahmeeinrichtung in Form einer hydrostatischen Pumpenanordnung, deren Eingangswelle über eine starre Kupplung biegesteif mit einer angetriebenen Fahrzeugwelle verbunden ist. Die Kupplung ist an einem Endabschnitt der Pumpeneingangswelle montiert. Die Pumpenanordnung ist für eine begrenzte Drehbewegung relativ zur Halterung montiert. An der Halterung ist zudem eine Bodenstütze mit Stützrädern befestigt. Eine Dehnungsmessstreifenanordnung ist zwischen der Pumpenanordnung und dem Halter angeschlossen und dient dem Zweck, das von der Pumpenanordnung auf den Halter ausgeübte Drehmoment zu messen.

EP 1 519 182 A2 offenbart einen Prüfstand zur Betriebslastensimulation für Fahrzeugkomponenten, Fahrzeuge und dergleichen, wobei mindestens ein Belastungs-System bestehend aus einer stationären Plattform, einer beweglichen Plattform, sowie diese verbindende ansteuerbare Arbeitszylinder vorgesehen ist, und wobei die bewegliche Plattform mit dem Prüfling gekoppelt ist. Durch Ansteuerung der Arbeitszylinder mittels der beweglichen Plattform sind Kräfte und/oder Momente und/oder Wege auf den Prüfling übertragbar. Die bewegliche Plattform ist dabei als Spannzeug für den Prüfling ausgebildet.

WO 2013/135246 A1 offenbart eine Lastanwendungseinheit, die einen festen Teil umfasst, der zum Befestigen der Lastanwendungseinheit an einer Basisstruktur geeignet ist, und ein bewegliches Lastanwendungsmittel, das zum Wirkverbund mit einem zu prüfenden Gerät mittels einer Reihe von Aktuatoren geeignet ist. Das bewegliche Lastanwendungsmittel umfasst einen vorderen Ringteil, der koaxial mit dem festen Teil verbunden ist, und zwar mittels eines Hexapod-Systems aus drei winkelverteilten Paaren unabhängig steuerbarer Linearantriebe, die zum Bewegen des beweglichen Lastanwendungsmittels und des zu testenden Geräts ausgewählt sind, sowie ein Hauptlager, das einen äußeren Ringteil umfasst, der koaxial mit dem vorderen Ringteil verbunden ist, und einen inneren Ringteil, der zum Eingreifen in eine Drehwelle geeignet ist.

Die DE 100 21 906 A1 offenbart einen Prüfstand Fahrzeuge, der ein Prüfstandserregungssystem aufweist, über das zumindest ein Teil eines Fahrzeugs zu beaufschlagen ist, wobei das Prüfstandserregungssystem über einen Rechner regelbar ist, in dem das dynamische Fahrverhalten des zu untersuchenden Fahrzeugs gemäß einem hinterlegten Fahrzeugersatzmodell in Abhängigkeit von Messgrößen des realen Fahrzeugteils berechenbar ist. Zustandsgrößen, welche im Rechner ermittelt werden, sind auf das Prüfstandserregungssystem zur Positionierung des Fahrzeugteils übertragbar.

Die bekannten Kraftfahrzeugprüfstände sind jedoch insofern nachteilbehaftet, als dass diese, insbesondere wenn sie zur Prüfung eines bereits in das Kraftfahrzeug eingebauten Antriebsstrangs vorgesehen sind, eine vergleichsweise große Aufstellfläche benötigen und vor allem auf eine aufwändige und teure mechanische Tragekonstruktion angewiesen sind.

Es ist eine Aufgabe der vorliegenden Erfindung, einen verbesserten Prüfstand für einen Antriebsstrang eines Kraftfahrzeugs vorzuschlagen.

Diese Aufgabe wird erfindungsgemäß durch den Prüfstand für einen Antriebsstrang eines Kraftfahrzeugs gemäß Anspruch 1 gelöst. Vorteilhafte Ausgestaltungen ergeben sich aus den Unteransprüchen.

Die Erfindung betrifft einen Prüfstand für einen Antriebsstrang eines Kraftfahrzeugs, umfassend mindestens einen Belastungsmotor mit einem Motorgehäuse und einer Motorwelle, mindestens einen Belastungssensor und mindestens ein Abstellmodul, wobei die Motorwelle dazu ausgebildet ist, trieblich mit einer Nabe des Kraftfahrzeugs verbunden zu werden und wobei der Belastungssensor dazu ausgebildet ist, eine von der Motorwelle auf die Nabe übertragene Belastung zu erfassen. Der erfindungsgemäße Prüfstand zeichnet sich dadurch aus, dass eine der Nabe zugewandte Axialseite des Motorgehäuses und das mindestens eine Abstellmodul dazu ausgebildet sind, drehfest miteinander verbunden zu werden, dass der Belastungssensor auf einer der Nabe zugewandten Axialseite des Motorgehäuses axial zwischen der Motorwelle und der Nabe angeordnet ist und dass die Motorwelle mit der Nabe über den Belastungssensor trieblich verbindbar ist.

Die Erfindung beschreibt also einen Prüfstand, der dazu geeignet ist, einen Antriebsstrang eines Kraftfahrzeugs zu prüfen. Bei dem Kraftfahrzeug kann es sich gleichermaßen um ein elektromotorisch angetriebenes Kraftfahrzeug handeln wie auch um ein konventionell angetriebenes Kraftfahrzeug.

Der Prüfstand umfasst dazu mindestens einen Belastungsmotor mit einem Motorgehäuse und einer Motorwelle. Bei dem Belastungsmotor handelt es sich vorteilhaft um einen Elektromotor. Elektromotoren sind vergleichsweise kompaktbauend, haben insbesondere im Vergleich zu Verbrennungsmotoren ein breites Drehzahlspektrum und weisen vorteilhaft über einen weiten Drehzahlbereich das maximale Drehmoment auf. Erst bei Erreichen des sog. "Eckpunkts" im hohen Drehzahlbereich nimmt das Drehmoment aufgrund der zunehmenden Feldschwächung indirekt proportional zur weiter zunehmenden Drehzahl ab.

Bevorzugt ist es vorgesehen, dass der mindestens eine Belastungsmotor als permanenterregter Synchronmotor ausgebildet ist. Besonders vorteilhaft umfasst der Synchronmotor eine vergleichsweise große Anzahl von magnetischen Polpaaren, beispielsweise zwölf oder mehr magnetische Polpaare. Derartige Synchronmotoren sind auch als sog. Synchro-Torque-Motoren bekannt. Daraus ergibt sich der Vorteil, dass der Belastungsmotor vergleichsweise kompakt und kurz ausgebildet sein kann, was in Folge zu einer Anordnung des Schwerpunkts des Belastungsmotors sehr dicht am Fahrwerk des Kraftfahrzeugs führt.

Vorteilhaft ist jedem Belastungsmotor ein eigener Inverter zugeordnet. Der Inverter ist beispielweise dreiphasig ausgebildet.

Der mindestens eine Belastungsmotor umfasst seinerseits ein Motorgehäuse, über welches der Belastungsmotor beispielsweise auf einem Untergrund oder einer dafür vorgesehenen Vorrichtung abgestellt werden. Alternativ oder zusätzlich ist das Motorgehäuse auch dazu ausgebildet, eine Anordnung oder Abstützung des Belastungsmotors beispielsweise über dessen sog. a-Seite bzw. b-Seite zu ermöglichen.

Das Motorgehäuse kann beispielsweise eine Wasserkühlung aufweisen.

Schließlich umfasst der mindestens eine Belastungsmotor auch eine Motorwelle, welche das vom Belastungsmotor erzeugte Drehmoment und die vom Belastungsmotor erzeugte Drehzahl bereitstellt. Die Motorwelle kann trieblich mit einer der Naben der Räder des Kraftfahrzeugs verbunden werden, so dass ein Drehmoment und eine Drehzahl von der Motorwelle in die Nabe eingeleitet werden können. Das Drehmoment und die Drehzahl stellen gemeinsam eine mechanische Leistung dar, mit welcher der zu prüfende Antriebsstrang belastet werden kann. Das Drehmoment und die Drehzahl stellen somit die im Rahmen der Prüfung erfolgende Belastung des Antriebsstrangs dar.

Unter einer trieblichen Verbindung wird im Sinne der Erfindung eine mechanische Verbindung zur Übertragung von mechanischer Leistung verstanden, wobei das Drehmoment und die Drehzahl im Rahmen der Übertragung vom Belastungsmotor zur Nabe gewandelt werden können. D.h. also, dass der Belastungsmotor beispielsweise eine erste Drehzahl und ein erstes Drehmoment bereitstellt, wobei die erste Drehzahl und das erste Drehmoment die erste Leistung darstellen. Im Rahmen der Übertragung der ersten Leistung kann das erste Drehmoment zum zweiten Drehmoment gewandelt werden und die erste Drehzahl zur zweiten Drehzahl gewandelt werden. Die erste Leistung bleibt durch die Übertragung jedoch unverändert. Durch die Definition, dass die Motorwelle trieblich mit der Nabe verbunden ist bzw. verbindbar ist, ist also nicht festgelegt, dass es eine unmittelbare mechanische Verbindung, insbesondere keine drehfeste Verbindung, zwischen der Motorwelle und der Nabe geben muss. Vielmehr kann die triebliche Verbindung auch ein Getriebe oder eine einzelne Übersetzungsstufen oder sonstige Zwischenelemente umfassen.

Weiterhin umfasst der Prüfstand mindestens einen Belastungssensor, wobei der Belastungssensor dazu ausgebildet ist, eine von der Motorwelle auf die Nabe übertragene Belastung zu erfassen. Dabei kann es sich beispielsweise um eine Drehzahl oder um ein Drehmoment oder sowohl um eine Drehzahl als auch um ein Drehmoment handeln.

Bevorzugt ist es vorgesehen, dass der mindestens eine Belastungssensor als Drehmomentsensor und/oder als Kraftsensor ausgebildet ist. Da sich die Drehzahl des Belastungsmotors beispielsweise auch über dessen Ansteuerelektronik, insbesondere den Inverter, erfassen lässt, ist es vorteilhaft ausreichend, den Belastungssensor zum Erfassen des Drehmoments bzw. der über einen Hebel wirkenden Kraft auszubilden. Aus der bekannten Drehzahl und dem solcherart bestimmten Drehmoment kann dann beispielsweise die Leistung bzw. die Belastung bestimmt werden.

Erfindungsgemäß ist es weiterhin vorgesehen, dass eine der Nabe zugewandte Axialseite des Motorgehäuses und das mindestens eine Abstellmodul dazu ausgebildet sind, drehfest miteinander verbunden zu werden. Das mindestens eine Abstellmodul und das Motorgehäuse können über dafür vorgesehene Verbindungsmittel, beispielsweise eine Flanschverbindung, drehfest miteinander verbunden zu werden. Denkbar ist auch eine axiale Steckverbindung, die im Wesentlich ausschließlich das Drehmoment abstützt, aber axial weitgehend beweglich ist.

Das Abstellmodul wird vorteilhaft anstelle eines Fahrzeugrads bzw. wie ein Fahrzeugrad an der Nabe des Kraftfahrzeugs montiert.

Bevorzugt ist es dabei vorgesehen, dass die der Nabe zugewandte Axialseite des Motorgehäuses und das mindestens eine Abstellmodul dazu ausgebildet sind, über einen Ringkörper drehfest miteinander verbunden zu werden. D.h. also, dass der mindestens eine Belastungsmotor über seine a-Seite nicht unmittelbar mit dem Abstellmodul verbunden ist, sondern über den Ringkörper drehfest mit dem Abstellmodul verbunden ist. Der Ringkörper ist vorzugsweise metallisch ausgebildet, insbesondere aus Stahl ausgebildet, und weist eine hohlzylinderförmige Grundform auf, wobei sein Durchmesser vorteilhaft größer ist als seins Zylinderlänge. Somit ergibt sich ein im Wesentlichen ringförmiger Körper.

Die Mantelfläche des Ringkörpers ist bevorzugt massiv ausgebildet, um ein hohes Drehmoment abstützen zu können.

Vorteilhaft ist der Durchmesser des Ringkörpers so groß wie der Durchmesser des Motorgehäuses, so dass der Ringkörper eine axiale Verlängerung des Motorgehäuses in Richtung des Abstellmoduls darstellt. Alternativ bevorzugt kann der Durchmesser des Ringkörpers auch geringer sein als der Durchmesser des Motorgehäuses.

Bevorzugt weist der Ringkörper an einem oder beiden axialen Enden einen Kragen auf, welcher als Flanschfläche zur Verbindung mit dem Motorgehäuse bzw. dem Abstellmodul verwendbar ist. Der Kragen kann nach radial innen oder nach radial außen weisen oder an einem axialen Ende nach radial innen weisen und am anderen axialen Ende nach radial außen weisen.

Vorteilhaft ist der Ringkörper unlösbar mit dem Motorgehäuse oder unlösbar mit dem Abstellmodul verbunden ist. Daraus ergibt sich der Vorteil, dass eine besonders belastbare und drehmomentstabile Verbindung besteht. Die unlösbare Verbindung kann beispielsweise eine von vornherein einstückige Ausbildungsweise des Motorgehäuses und des Ringkörpers oder des Abstützmoduls und des Ringkörpers sein. Alternativ kann die unlösbare Verbindung auch eine Schweißverbindung oder eine Nietverbindung sein.

Da also das Motorgehäuse und somit der ganze Belastungsmotor über den Ringkörper an das Abstellmodul anliegt, besteht auch nicht die Notwendigkeit, das Drehmoment bzw. die Drehzahl über eine Gelenkwelle in den Antriebsstrang einzuleiten.

Erfindungsgemäß ist es weiterhin vorgesehen, dass der Belastungssensor auf einer der Nabe zugewandten Axialseite des Motorgehäuses, also der sog. a-Seite, axial zwischen der Motorwelle und der Nabe angeordnet ist und dass die Motorwelle mit der Nabe über den Belastungssensor trieblich verbindbar ist. Das bedeutet also, dass sowohl die Motorwelle als auch die Nabe des Kraftfahrzeugs über den axial zwischen ihnen angeordneten Drehzahlsensor zum Prüfen des Antriebsstrangs drehfest miteinander verbunden werden können. Damit lässt sich vorteilhaft eine sehr kurze und damit sehr steife Anbindung herstellen, so dass im Betrieb des Prüfstands das Auftreten von Schwingungen mit den Prüfvorgang störender Intensität nahezu vollständig vermieden werden kann. Zudem ist der Belastungssensor unmittelbar in den Drehmomentfluss integriert.

Der Belastungssensor und die Motorwelle sind dann vorteilhaft radial vom Ringkörper eingehaust.

Gleichzeitig stützt sich der Belastungsmotor - ebenso wie das zu prüfende Kraftfahrzeug über seine Aufhängung - über das Abstellmodul ab, welches seinerseits auf einem Untergrund aufgestellt ist und dort die auf ihm lastende Gewichtskraft abstützt. Der Untergrund kann gegenüber dem Abstellmodul einen besonders hohen Reibwert aufweisen, um auch das Übertragen hoher Drehmomente vom Belastungsmotor auf das Abstellmodul zu ermöglichen.

Weiterhin kann es vorgesehen sein, dass das mindestens eine Abstellmodul kraftschlüssig oder formschlüssig mit einem Untergrund verbindbar ist. Beispielsweise kann die Haftung des Abstellmoduls auf dem Untergrund noch weiter erhöht werden, indem das Abstellmodul etwa mittels eines Spanngurts, dessen Enden fest mit dem Untergrund verbunden sind, über seine Lauffläche eingespannt wird. Um die Haftung des Abstellmoduls auf dem Untergrund nochmals weiter zu verbessern, kann das Abstellmodul weiterhin zum Beispiel mittels eines Bolzens, der im Untergrund angeordnet ist und radial von außen in das Abstellmodul eindringt, auf dem Untergrund angeordnet werden.

Die Erfindung beschreibt somit einen sehr kompakten Prüfstand zum Prüfen eines Antriebsstrangs eines Kraftfahrzeugs, bei dem der Belastungsmotor ohne eine Zwischenwelle direkt mit einer Nabe des Kraftfahrzeugs verbunden werden kann. Daraus ergibt sich weiterhin der Vorteil, dass der benötigte Prüfraum vergleichsweise sehr viel kleiner ausfällt und insbesondere kein sperriges und teures Prüfgestell bzw. keine entsprechende Rahmenkonstruktion erforderlich sind, um das Kraftfahrzeug und die Belastungsmotoren zu halten und zueinander auszurichten. Insbesondere ist auch keine aufwändige und zeitraubende Ausrichtung bzw. Justage des Antriebsstrangs bzw. des Kraftfahrzeugs zum Prüfstand mehr erforderlich. Ein weiterer wesentlicher Vorteil der Erfindung ist darin zu sehen, dass der Prüfvorgang mittels des erfindungsgemäßen Prüfstands insbesondere auch die Fahrwerkseigenschaften des zu prüfenden Kraftfahrzeugs weitestgehend unbeeinflusst lässt, da das zu prüfende Kraftfahrzeug während des Prüfvorgangs ausschließlich über das Fahrwerk abgestützt ist. Somit können vorteilhaft fahrwerkespezifische Eigenschaften wie das Einfederungsverhalten, Lenkverhalten und ähnliche Eigenschaften sehr realitätsnah geprüft werden.

Vorteilhaft ist es vorgesehen, dass der Prüfstand für jedes antreibbare Rad des Kraftfahrzeugs jeweils einen Belastungsmotor, jeweils einen Belastungssensor und jeweils ein Abstellmodul umfasst. Somit kann der vollständige Antriebsstrang des Kraftfahrzeugs in einem Prüflauf geprüft werden.

Gemäß einer bevorzugten Ausführungsform der Erfindung ist es vorgesehen, dass das mindestens eine Abstellmodul eine konzentrische Öffnung aufweist, über welche die Nabe von einer dem mindestens einen Belastungsmotor zugewandten Seite aus zugänglich ist. Die konzentrische Öffnung ist dabei vorteilhaft mindestens so groß, dass die Nabe des Kraftfahrzeugs vollständig offen liegt. Dadurch kann die Motorwelle über den Belastungssensor drehfest mit der Nabe verbunden werden. Das Abstellmodul mit der konzentrischen Öffnung ist dabei beispielsweise drehfest an der der Nabe des Kraftfahrzeugs zugewandten Axialseite des Belastungsmotors angeordnet.

Erfindungsgemäß ist es vorgesehen, dass das mindestens eine Abstellmodul einen radialen Außenteil und einen radialen Innenteil aufweist, wobei der Innenteil drehbar im Außenteil gehalten ist, wobei der Innenteil dazu ausgebildet ist, mit der Nabe des Kraftfahrzeugs drehfest verbunden zu werden und wobei der Außenteil dazu ausgebildet ist, drehfest mit der der Nabe zugewandten Axialseite des Motorgehäuses verbunden zu werden. In diesem Fall ist das mindestens eine Abstellmodul also zweiteilig ausgebildet, wobei der radiale Innenteil des Abstellmoduls gegenüber dem radialen Außenteil des Abstellmoduls drehbar ist, so dass auch in diesem Fall der mindestens eine Belastungsmotor mit dem Abstellmodul, nämlich dem Außenteil, drehfest verbunden werden kann. Somit kann der mindestens eine Belastungsmotor sich also auch in diesem Fall am Abstellmodul abstützen. Gleichzeitig kann das Abstellmodul in diesem Fall aber nicht nur über den Belastungsmotor mit der Nabe verbunden sein, sondern über den gegenüber dem Außenteil drehbaren Innenteil auch direkt mit der Nabe drehfest verbunden sein. Daraus ergibt sich eine vereinfachte Montage des Belastungsmotors an den Antriebsstrang des Kraftfahrzeugs, da das Abstellmodul zunächst wie ein normales Fahrzeugrad am Kraftfahrzeug montiert werden kann und das Kraftfahrzeug darüber hinaus mit dem montierten Abstellmodul beispielsweise geschoben werden kann und somit auf einfache Weise positioniert bzw. ausgerichtet werden kann. Ebenso sind jedoch auch andere Ausbildungsformen bzw. Anordnungsformen des mindestens einen Abstellmoduls und der Welle denkbar.

Erfindungsgemäß ist es vorgesehen, dass die Motorwelle drehfest mit dem Innenteil verbindbar ist. Da der Innenteil drehfest mit der Nabe verbunden ist, kann somit eine vom Belastungsmotor bereitgestellte Belastung über die Motorwelle auf den Innenteil des Abstellmoduls übertragen werden und von dort über die Nabe in den Antriebsstrang des Kraftfahrzeugs eingeleitet werden.

Gemäß der Erfindung ist es vorgesehen, dass ein Verdrehen des Innenteils gegen den Außenteil blockierbar ist. Das Blockieren kann beispielweise durch Verschieben von dazu vorgesehenen Bolzen bzw. Schlitten oder durch Positionieren eines Klemmelements erfolgen, so dass eine Relativbewegung des Außenteils zum Innenteil blockiert wird. Daraus ergibt sich der Vorteil, dass sich das Kraftfahrzeug sogar aus eigener Kraft bewegen kann und entsprechend einfach für die Prüfung positioniert und ausgerichtet werden kann. Beispielsweise kann an jedem zu prüfenden Rad ein entsprechend blockierbares Abstellmodul montiert werden und anschließend kann das Kraftfahrzeug innerhalb des Prüfgeländes, beispielsweise in einer großräumigen Halle, vom Ort der Abstellmodul-Montage an den Ort der Prüfung fahren.

Gemäß einer weiteren bevorzugten Ausführungsform der Erfindung ist es vorgesehen, dass auf dem mindestens einen Abstellmodul ein Luftreifen angeordnet ist. In diesem Fall ergibt sich ein Abstützverhalten des Abstellmoduls auf dem Untergrund, welches weitestgehend dem Abstützverhalten eines im normalen Fahrbetrieb des Kraftfahrzeugs auftretenden Abstützverhalten entspricht. Dadurch kann die Qualität der Prüfung verbessert werden, da das Verhalten des Antriebsstrangs in der Prüfungssituation noch näher am Verhalten des Antriebsstrangs im normalen Fahrbetrieb des Kraftfahrzeugs ist.

Bevorzugt ist auf dem Abstellmodul ein Luftreifen angeordnet, der auch im Straßenbetrieb des Kraftfahrzeugs zum Betrieb des Kraftfahrzeugs zulässig ist.

Gemäß einer alternativ bevorzugten Ausführungsform der Erfindung ist es vorgesehen, dass auf dem mindestens einen Abstellmodul eine Gummibeschichtung angeordnet ist. Die Gummibeschichtung ermöglicht ebenfalls eine vergleichsweise realitätsnahe Abstützung des Abstellmoduls auf dem Untergrund, erfordert dabei allerdings im Gegensatz zum Luftreifen keine gesonderte Auswahl und Montage eines jeweils geeigneten Luftreifens auf dem Abstellmodul. Stattdessen kann die Gummibeschichtung fest und dauerhaft auf dem Abstellmodul angeordnet sein.

Gemäß einer weiteren bevorzugten Ausführungsform der Erfindung ist es vorgesehen, dass der Prüfstand weiterhin mindestens eine Motorstütze umfasst, welche dazu ausgebildet ist, ein Kippmoment des mindestens einen Belastungsmotors abzustützen. Da der Belastungsmotor nur über eine Axialseite, vorzugsweise die a-Seite, mit dem Abstellmodul verbunden ist und ausschließlich über das Abstellmodul gehalten wird, wirkt auf den Belastungsmotor ein Kippmoment, welches einen ungünstigen Einfluss auf die Prüfung haben kann. Dieses Kippmoment wird vorteilhaft durch die Motorstütze abgefangen. Die Motorstütze kann dabei beispielsweise im Bereich der der Nabe abgewandten Axialseite des Motorgehäuses, vorzugsweise der b-Seite des Motorgehäuses, unterhalb des Motorgehäuses angeordnet sein, um den Belastungsmotor von unten abzustützen. Ebenso ist es denkbar, die Motorstütze derart anzubringen, dass sie den Belastungsmotor von oben hält, d.h., dass der Belastungsmotor an der Motorstütze hängt. Die Motorstütze kann in letzterem Fall beispielsweise kostengünstig und einfach als Seil, insbesondere als Drahtseil, ausgebildet sein.

Sofern die Motorstütze den Belastungsmotor von oben hält, kann sie insbesondere ein Kompensationselement umfassen, welches im Kraftfluss angeordnet ist und seinerseits eine vorspannbare Feder enthält. Über eine einstellbare Vorspannung der Feder kann dabei vorteilhaft ein zu kompensierendes Kippmoment bzw. eine dem Kippmoment entsprechende, zu kompensierende Kraft eingestellt werden. Dadurch kann gewährleistet werden, dass keine Überkompensation des Kippmoments erfolgt.

Gemäß einer weiteren bevorzugten Ausführungsform der Erfindung ist es vorgesehen, dass der Prüfstand weiterhin mindestens einen Abstützstempel umfasst, wobei der Abstützstempel in drei Raumrichtungen verstellbar und/oder um drei Achsen verdrehbar ist und wobei der Abstützstempel dazu ausgebildet ist, das Abstellmodul abzustützen oder dass der Prüfstand weiterhin mindestens eine hexapodenartige Aktuatorvorrichtung umfasst, wobei die Aktuatorvorrichtung dazu ausgebildet ist, die Nabe in drei Raumrichtungen zu verstellen und/oder um drei Achsen zu verdrehen. Durch entsprechende Betätigung des Abstützstempels beispielsweise entlang einer Hochachse lassen sich somit etwa Bodenunebenheiten während einer Fahrt des Kraftfahrzeugs simulieren. Ebenso lassen sich auch nahezu alle anderen Einflüsse eines möglichen Untergrunds über den Abstützstempel simulieren, insbesondere auch in Verbindung mit Lenkbewegungen von lenkbaren Rädern des Kraftfahrzeugs. Die hexapodenartige Aktuatorvorrichtung greift bevorzugt an der Nabe des Kraftfahrzeugs an und ist ebenfalls in der Lage, Bodenunebenheiten während einer Fahrt sowie nahezu alle anderen Einflüsse eines möglichen Untergrunds zu simulieren. Die hexapodenartige Aktuatorvorrichtung umfasst, wie der Name bereits sagt, sechs Aktuatoren, die z.B. als Hydraulikzylinder ausgebildet sein können. Somit wird eine besonders realitätsnahe Prüfung des Antriebsstrangs ermöglicht.

Nachfolgend wird die Erfindung anhand von in den Figuren dargestellten Ausführungsformen beispielhaft erläutert.

Es zeigen:
- Fig. 1: beispielhaft und schematisch einen im Stand der Technik bekannten Prüfstand zum Prüfen eines Antriebsstrangs eines Kraftfahrzeugs sowie das zu prüfende Kraftfahrzeug,
- Fig. 2: beispielhaft und schematisch eine mögliche Ausführungsform eines erfindungsgemäßen Prüfstands für einen Antriebsstrang eines Kraftfahrzeugs sowie das zu prüfende Kraftfahrzeug,
- Fig. 3: beispielhaft und schematisch eine mögliche Ausführungsform eines erfindungsgemäßen Prüfstands im Detail,
- Fig. 4: beispielhaft und schematisch eine weitere mögliche Ausführungsform eines erfindungsgemäßen Prüfstands,
- Fig. 5: beispielhaft und schematisch eine nochmals weitere mögliche Ausführungsform eines erfindungsgemäßen Prüfstands,
- Fig. 6: beispielhaft und schematisch eine nochmals weitere mögliche Ausführungsform eines erfindungsgemäßen Prüfstands,
- Fig. 7: beispielhaft und schematisch eine mögliche Ausführungsform eines erfindungsgemäßen Abstellmoduls und
- Fig. 8: beispielhaft und schematisch eine nochmals weitere mögliche Ausführungsform eines erfindungsgemäßen Prüfstands.

Gleiche Gegenstände, Funktionseinheiten und vergleichbare Komponenten sind figurenübergreifend mit den gleichen Bezugszeichen bezeichnet. Diese Gegenstände, Funktionseinheiten und vergleichbaren Komponenten sind hinsichtlich ihrer technischen Merkmale identisch ausgeführt, sofern sich aus der Beschreibung nicht explizit oder implizit etwas anderes ergibt.

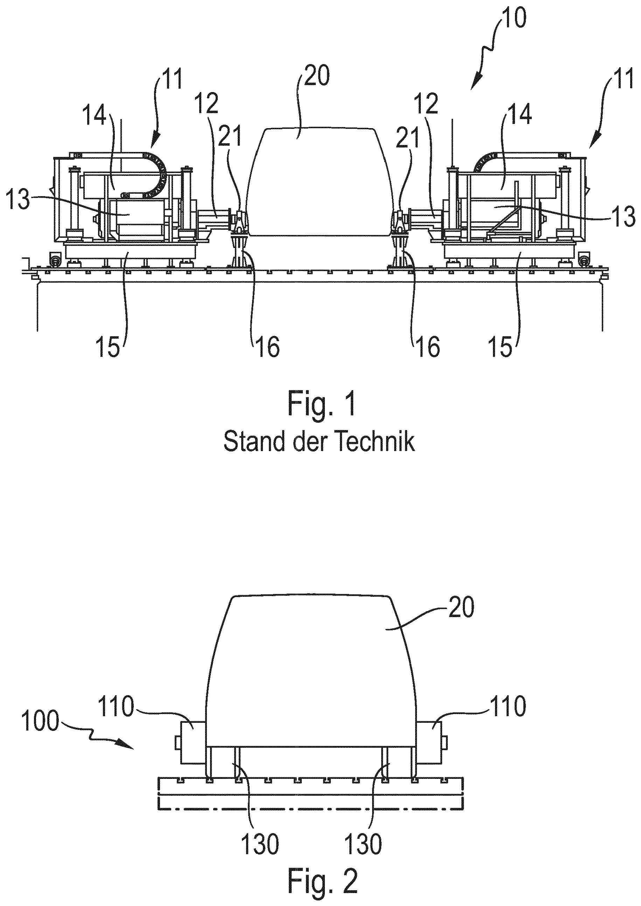

Fig. 1 zeigt beispielhaft und schematisch einen im Stand der Technik bekannten Prüfstand 10 zum Prüfen eines Antriebsstrangs eines Kraftfahrzeugs 20 sowie das zu prüfende Kraftfahrzeug 20. Der Antriebsstrang ist dabei bereits vollständig in das Kraftfahrzeug 20 eingebaut. Der bekannte Prüfstand 10 umfasst zwei Belastungseinheiten 11, die jeweils über Verbindungswellen 12 mit Naben 21 von antreibbaren Rädern des Kraftfahrzeugs 20 verbunden sind. Es sind insbesondere für allradgetriebene Fahrzeuge jedoch auch gattungsgleiche Prüfstande 10 vier Belastungseinheiten 11 bekannt. Die Belastungseinheiten 11 umfassen ihrerseits jeweils einen am elektrischen Antriebsmotor 13 angeordneten Klemmenkasten 14 zur Aufnahme der Kabel, die den elektrischen Antriebsmotor 13 mit elektrischer Energie versorgen. Die Antriebsmotoren 13 sind jeweils auf einem Rahmengestell 15 angeordnet, wobei das Rahmengestell 15 seitenverstellbar ist, um an die Spurbreite unterschiedlicher Fahrzeugtypen angepasst werden zu können. Das Kraftfahrzeug 20 wird üblicherweise mittels einer Hebevorrichtung, beispielsweise eines Krans, auf die Abstützelemente 16 gehoben und dort abgestellt. Die Abstützelemente 16 weisen jeweils eine Aufnahmelagerung zur Befestigung an den Naben der Fahrzeugräder auf. Der Aufbau und damit der Raumbedarf des bekannten Prüfstands 10 sind vergleichsweise groß. Da an den Naben 21 des Kraftfahrzeugs 20 keine Räder montiert sind, kann das Kraftfahrzeug 20 zudem weder aus eigener Kraft noch durch Schieben in die Prüfposition im Prüfstand 10 gebracht werden.

Fig. 2 zeigt beispielhaft und schematisch eine mögliche Ausführungsform eines erfindungsgemäßen Prüfstand 100 für einen Antriebsstrang eines Kraftfahrzeugs 20 sowie das zu prüfende Kraftfahrzeug 20. Wie zu sehen ist, umfasst der erfindungsgemäße Prüfstand 100 zwei Belastungsmotoren 110, die direkt an den Naben 21 (nicht dargestellt in Fig. 2) des Kraftfahrzeugs 20 angeordnet werden können. Dadurch ist der erfindungsgemäße Prüfstand 100 im Vergleich zu bekannten Prüfständen 10 wesentlich kompakter und kostengünstiger. Insbesondere ist keine aufwändige Ausrichtung von Belastungseinheiten 11 bzw. Belastungsmotoren 110 relativ zum Kraftfahrzeug 20 erforderlich. Weiterhin kann das Kraftfahrzeug 20 mittels der Abstellmodule 130 aus eigener Kraft an die erforderliche Prüfposition bewegt werden. Von besonderem Vorteil ist weiterhin, dass der erfindungsgemäße Prüfstand 100 durch seinen Aufbau keine raumgreifenden Rahmengestelle 15 benötigt.

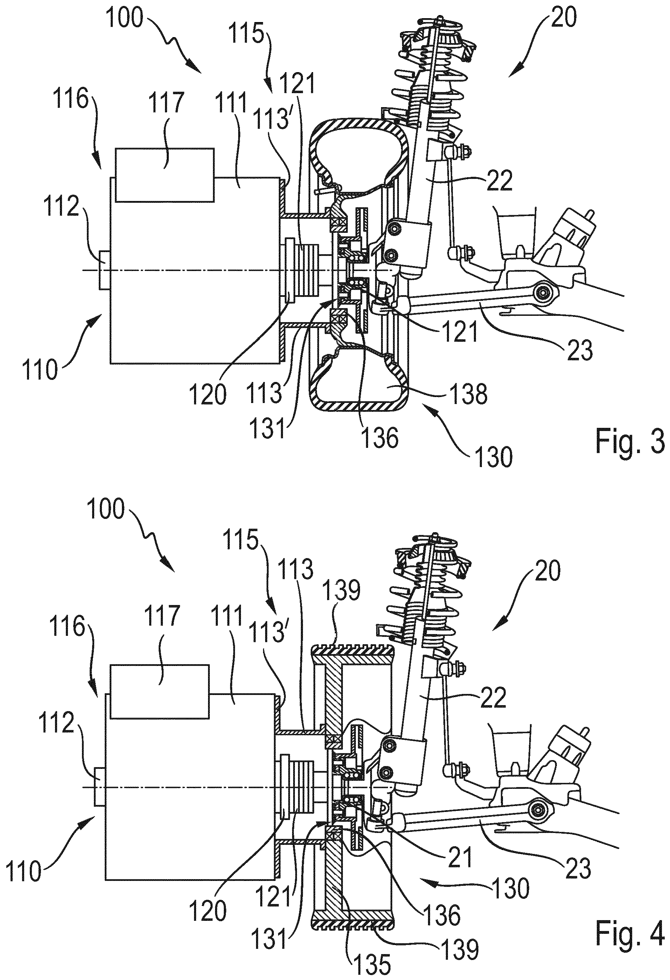

Fig. 3 zeigt beispielhaft und schematisch eine mögliche Ausführungsform eines erfindungsgemäßen Prüfstands 100 im Detail. Zu sehen ist der als Elektromotor 110 ausgebildete Belastungsmotor 110, der ein Motorgehäuse 111 und eine Motorwelle 112 aufweist. Beim Elektromotor 110 bzw. Belastungsmotor 110 handelt es sich beispielsgemäß um einen permanenterregten Synchro-Torque-Motor 110 mit flüssigkeitsgekühlter Motorwelle 112. Beispielsgemäß weist die Motorwelle 112 eine in Fig. 3 nicht dargestellte Drehdurchführung auf, in welche Glycol als Kühlmittel einleitbar ist. Durch ebenfalls nicht dargestellte Bohrungen in der Motorwelle 112 wird die Motorwelle 112 vom Glycol durchströmt und gekühlt. Der Synchro-Torque-Motor ist als Synchronmotor ausgebildet und weist beispielsgemäß 12 permanentmagnetische Polpaare auf. Diese vergleichsweise große Anzahl an Polpaaren verleiht dem Belastungsmotor 110 auch bei Beaufschlagung mit vergleichsweise geringen Stromstärken bereits ein vergleichsweise sehr hohes Drehmoment. Diese Ausbildungsform führt weiterhin zu dem Vorteil, dass der Belastungsmotor 110 eine vergleichsweise große radiale Breite im Vergleich zur axialen Länge aufweist. Derartige Elektromotoren 110 sind allgemein als sog. "Torque-Motoren" bekannt. Ein Inverter 117 ist beispielsgemäß direkt am Motorgehäuse 111 angeordnet. Alternativ kann der Inverter 117 aber auch beabstandet vom Motorgehäuse 111 angeordnet sein. Weiterhin zu sehen ist ein als Drehmomentsensor 120 ausgebildeter Belastungssensor 120 sowie ein Abstellmodul 130. Der Belastungssensor 120 ist dabei axial zwischen der Motorwelle 112 und der Nabe 21 angeordnet, so dass die Motorwelle 112 mit der Nabe 21 über den Belastungssensor 120 trieblich verbunden ist.

Wie weiterhin zu sehen ist, umfasst der Prüfstand 100 der Fig. 3 auch einen Ringkörper 113, der axial zwischen dem Belastungsmotor 110 und dem Abstellmodul 130 angeordnet ist und diese drehfest miteinander verbindet. Der Belastungsmotor 110 ist also über seine a-Seite nicht unmittelbar mit dem Abstellmodul 130 verbunden ist, sondern vielmehr über den Ringkörper 113 drehfest mit dem Abstellmodul 130 verbunden. Beispielsgemäß besteht der Ringkörper 113 aus Stahl und weist einen massiven Mantelkörper auf. An dem dem Belastungsmotor 110 zugewandten axialen Ende des Ringkörpers 113 ist zudem ein radial nach außen weisender Kragen 113' angeordnet, welcher umlaufend an die a-Seite des Motorgehäuses 111 anliegt und eine Flanschverbindung zwischen dem Ringkörper 113 und dem Motorgehäuse 111 ermöglicht.

Der Belastungsmotor 110, der Belastungssensor 120, der Ringkörper 113 und das Abstellmodul 130 stellen gemeinsam eine mögliche Ausbildungsform des erfindungsgemäßen Prüfstands 100 dar. Nur ausschnittweise zu sehen ist das Kraftfahrzeug 20, von welchem in Fig. 3 der besseren Übersichtlichkeit wegen nur eine Nabe 21, ein Schwingungsdämpfer 22 und eine Radanlenkung 23 zu sehen sind.

Das Abstellmodul 130 weist eine konzentrische Öffnung 131 auf, über welche die Nabe 21 von einer dem Belastungsmotor 110 zugewandten Seite aus zugänglich ist. Die Nabe ist über eine Ausgleichskupplung 121 und den Belastungssensor 120 trieblich mit der Motorwelle 112 verbunden. Da die Nabe 21 ein Endglied des Antriebsstrangs des Kraftfahrzeugs 20 ist, besteht somit auch eine Triebverbindung zum Antriebsstrang des Kraftfahrzeugs 20, so dass der Antriebsstrang belastet und geprüft werden kann. Indem der Belastungssensor 120 trieblich zwischen der Motorwelle 112 und der Nabe 21 angeordnet ist, kann er ein vom Belastungsmotor 110 auf die Nabe 21 übertragene Belastung bzw. ein auf die Nabe 21 übertragenes Drehmoment erfassen. Die Ausgleichskupplung 121 ist dazu vorgesehen, evtl. bestehende Winkel- und Radialversätze auszugleichen.

Der Belastungsmotor 110 ist über den Ringkörper 113 mit einem radialen Außenteil 135 des Abstellmoduls 130 drehfest verbunden, wobei im Außenteil 135 drehbar ein radialer Innenteil 136 gehalten ist und wobei der Innenteil 136 die konzentrische Öffnung 131 aufweist. Durch diese Ausbildung ist das Abstellmodul 130 nur mittelbar über den Belastungsmotor 110 an der Nabe 21 gehalten. Im Prüfbetrieb stützt sich der Belastungsmotor 110 über den Außenteil 135 des Abstellmoduls 130 ab und kann somit eine Belastung in die Nabe 21 einleiten. Auf dem Abstellmodul 130 ist beispielsgemäß außerdem ein Luftreifen 138 angeordnet. Bei dem Luftreifen 138 handelt es sich beispielsgemäß um einen Luftreifen 138, der auch im Straßenbetrieb des Kraftfahrzeugs 20 zugelassen ist. Da das Kraftfahrzeug 20 während eines Prüfvorgangs auf dem Luftreifen 138 aufsteht, ergibt sich somit ein sehr realitätsnahes Prüfungsverhalten des Antriebsstrangs des Kraftfahrzeugs 20.

Fig. 4 zeigt beispielhaft und schematisch eine weitere mögliche Ausführungsform eines erfindungsgemäßen Prüfstands 100. Der Prüfstand 100 der Fig. 4 unterscheidet sich dabei vom Prüfstand 100 der Fig. 3 durch die Ausbildung des Abstellmoduls 130. Beispielsgemäß ist auf dem Abstellmodul 130 anstelle eines Luftreifens 138 eine Gummibeschichtung 139 angeordnet. Die Gummibeschichtung 139 ermöglicht ebenfalls eine vergleichsweise realitätsnahe Abstützung des Abstellmoduls 130 auf einem Untergrund, erfordert dabei allerdings im Gegensatz zum Luftreifen 138 keine gesonderte Auswahl und Montage eines jeweils geeigneten Luftreifens 138 auf dem Abstellmodul 130. Stattdessen kann die Gummibeschichtung 139 fest und dauerhaft auf dem Abstellmodul 130 angeordnet sein.

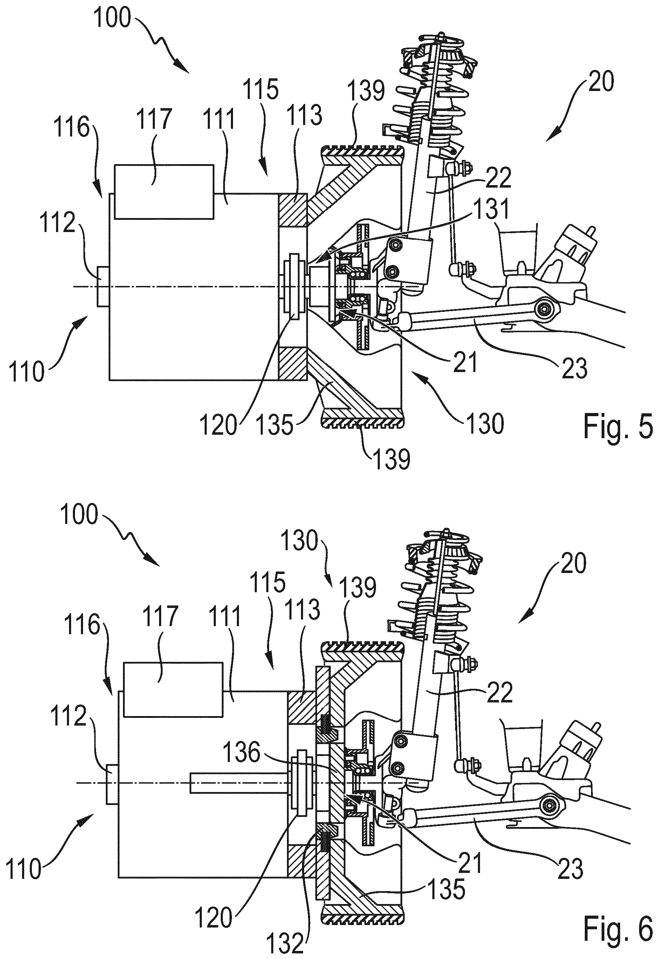

Fig. 5 zeigt beispielhaft und schematisch eine nochmals weitere mögliche Ausführungsform eines erfindungsgemäßen Prüfstands 100. Der Prüfstand 100 der Fig. 5 unterscheidet sich dabei vom Prüfstand 100 der Fig. 4 wiederum nur durch die Ausbildung des Abstellmoduls 130. Beispielsgemäß weist das Abstellmodul 130 keinen radialen Innenteil 136 auf, welcher drehbar im radialen Außenteil 135 gehalten wäre. Stattdessen weist das Abstellmodul 130 der Fig. 5 ausschließlich eine konzentrische Öffnung 131 auf. Weiterhin unterscheidet sich der Prüfstand 100 der Fig. 5 vom Prüfstand 100 der Fig. 4 durch die Ausbildung des Ringkörpers 113. Der Ringkörper 113 der Fig. 5 weist einen vergleichsweise größeren Durchmesser auf als der Ringkörper 113 der Fig. 4. Beispielsgemäß entspricht der Durchmesser der Ringkörpers 113 der Fig. 5 dem Durchmesser der Motorgehäuses 111. Zudem weist der der Ringkörper 113 der Fig. 5 keinen Kragen 113' auf.

Fig. 6 zeigt beispielhaft und schematisch eine nochmals weitere mögliche Ausführungsform eines erfindungsgemäßen Prüfstands 100. Der Prüfstand 100 der Fig. 6 unterscheidet sich dabei vom Prüfstand 100 der Fig. 5 durch die Ausbildung des Abstellmoduls 130. Gemäß dem Ausführungsbeispiel der Fig.6 weist das Abstellmodul 130 einen radialen Außenteil 135 und einen radialen Innenteil 136 auf, wobei der Innenteil 136 über die Motorwelle 112 und den Belastungsmotor 110 gehalten wird. Das Abstellmodul 130 weist jedoch keine konzentrische Öffnung 131 auf. Stattdessen ist der Innenteil 136 des Abstellmoduls 130 einerseits drehfest mit der Nabe 21 verbunden und andererseits drehfest mit der Motorwelle 112 verbunden. Zudem weist das Abstellmodul 130 eine Blockiervorrichtung 132 auf, welche im montierten Zustand des Belastungsmotor 110 eine Verdrehbarkeit des Innenteils 136 gegenüber dem Außenteil 135 zulässt, indem der Außenteil 135 in Richtung des Belastungsmotors 110 verrückt wird und somit nicht mehr in einer gemeinsamen Ebene mit dem Innenteil 136 liegt, so dass die Blockiervorrichtung 132 keine Bockierwirkung zwischen dem Innenteil 136 und dem Außenteil 135 entfalten kann. Nur wenn der Innenteil 136 und der Außenteil 135 gemeinsam mit der Blockiervorrichtung 132 in einer Ebene liegen, blockiert die Blockiervorrichtung 132 die Verdrehbarkeit. Daraus ergibt sich der Vorteil, dass sich das Kraftfahrzeug 20 aus eigener Kraft bewegen kann und entsprechend einfach für die Prüfung positioniert und ausgerichtet werden kann.

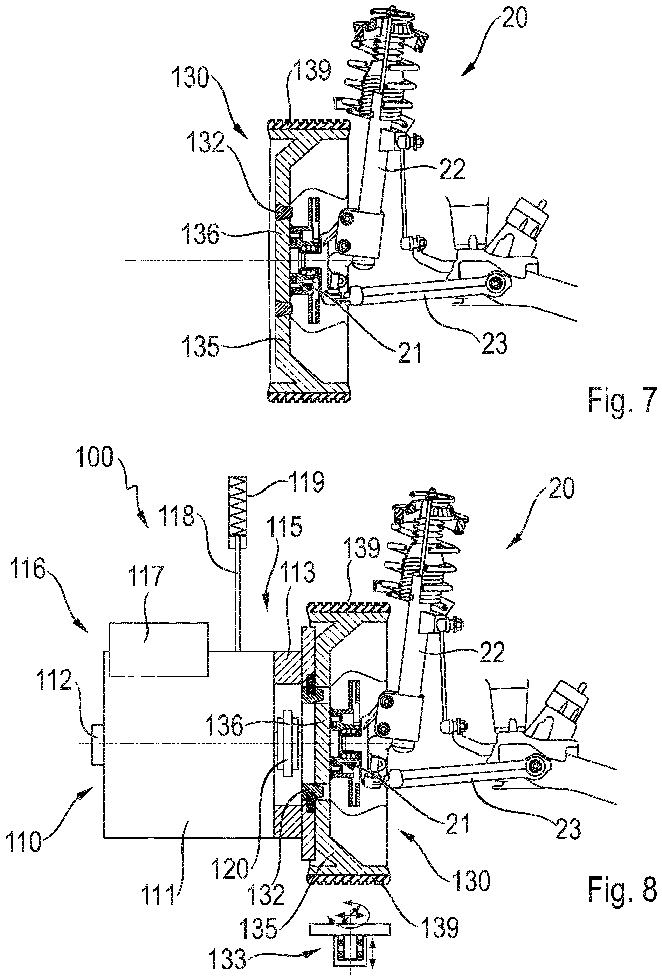

Fig. 7 zeigt beispielhaft und schematisch eine mögliche Ausführungsform eines erfindungsgemäßen Abstellmoduls 130 für einen Prüfstand 100. Das Abstellmodul 130 der Fig. 7 unterscheidet sich vom Abstellmodul 130 der Fig. 6 dadurch, dass die Blockiervorrichtung 132 im Blockierzustand zu sehen ist, da der Belastungsmotor 110 (nicht dargestellt in Fig. 7) nicht montiert ist. In diesem Zustand kann sich das Kraftfahrzeug 20 aus eigener Kraft fortbewegen, da der Innenteil 136 nicht gegen den Außenteil 135 verdrehen kann.

Fig. 8 zeigt beispielhaft und schematisch eine nochmals weitere mögliche Ausführungsform eines erfindungsgemäßen Prüfstands 100. Der Prüfstand 100 der Fig. 8 unterscheidet sich dabei vom Prüfstand 100 der Fig. 6 einerseits durch das Vorhandensein einer Motorstütze 118, welche beispielsgemäß von oben an das Motorgehäuse 111 angreift und ein Kippmoment des Belastungsmotors 110, welches andernfalls am Abstellmodul 130 abgestützt werden müsste, aufnimmt. Beispielsgemäß handelt es sich bei der Motorstütze 118 um ein Drahtseil 118, welches oberhalb des Prüfstands 100 an einer geeigneten Konstruktion befestigt ist. Beispielsgemäß umfasst die Motorstütze 118 weiterhin ein Kompensationselement 119, welches eine vorspannbare Feder enthält und über eine eingestellte Vorspannung der Feder genau das Kippmoment des Belastungsmotors 110 abstützt. Andererseits unterscheidet sich der Prüfstand 110 der Fig. 8 auch vom Prüfstand 100 der Fig. 6 durch das Vorhandensein eines Abstützstempels 133, der in drei Raumrichtungen verstellbar und um drei Achsen verdrehbar (jeweils durch Pfeile dargestellt) ist. Während des Prüfvorgangs kann das Abstellmodul 130 auf dem Abstützstempel 133 abgestützt werden. Durch eine entsprechende Betätigung des Abstützstempels 133 während des Prüfvorgangs lassen sich beispielsweise Bodenunebenheiten während einer Fahrt des Kraftfahrzeugs 20 simulieren. Ebenso lassen sich auch nahezu alle anderen Einflüsse eines möglichen Untergrunds simulieren, insbesondere auch in Verbindung mit Lenkbewegungen von lenkbaren Rädern des Kraftfahrzeugs 20.

### Bezugszeichen

- 10: Prüfstand
- 11: Belastungseinheit
- 12: Verbindungswelle
- 13: Antriebsmotor
- 14: Klemmenkasten
- 15: Rahmengestell
- 16: Abstützelement
- 20: Kraftfahrzeug
- 21: Nabe
- 22: Schwingungsdämpfer
- 23: Radanlenkung
- 100: Prüfstand
- 110: Belastungsmotor, Elektromotor, permanenterregter Synchronmotor
- 111: Motorgehäuse
- 112: Motorwelle
- 113: Ringkörper
- 113': Kragen
- 115: der Nabe zugewandten Axialseite
- 116: der Nabe abgewandten Axialseite
- 117: Inverter
- 118: Motorstütze, Drahtseil
- 119: Kompensationselement
- 120: Belastungssensor, Drehmomentsensor
- 121: Ausgleichskupplung
- 130: Abstellmodul
- 131: konzentrische Öffnung
- 132: Blockiervorrichtung
- 133: Abstützstempel
- 135: radialer Außenteil
- 136: radialer Innenteil
- 137: Lagerung
- 138: Luftreifen
- 139: Gummibeschichtung

## Patentansprüche

1. Prüfstand (100) für einen Antriebsstrang eines Kraftfahrzeugs (20), umfassend mindestens einen Belastungsmotor (110) mit einem Motorgehäuse (111) und einer Motorwelle (112), mindestens einen Belastungssensor (120) und mindestens ein Abstellmodul (130),
wobei die Motorwelle (112) dazu ausgebildet ist, trieblich mit einer Nabe (21) des Kraftfahrzeugs (20) verbunden zu werden,
wobei der Belastungssensor (120) dazu ausgebildet ist, eine von der Motorwelle (112) auf die Nabe (21) übertragene Belastung zu erfassen,
wobei eine der Nabe (21) zugewandte Axialseite (115) des Motorgehäuses (11) und das mindestens eine Abstellmodul (130) dazu ausgebildet sind, drehfest miteinander verbunden zu werden,
wobei der Belastungssensor (120) auf einer der Nabe (21) zugewandten Axialseite (116) des Motorgehäuses (111) axial zwischen der Motorwelle (112) und der Nabe (21) angeordnet ist,
wobei das mindestens eine Abstellmodul (130) einen radialen Außenteil (135) und einen radialen Innenteil (136) aufweist,
wobei der Innenteil (136) drehbar im Außenteil (135) gehalten ist und
wobei der Innenteil (136) dazu ausgebildet ist, mit der Nabe (21) des Kraftfahrzeugs (20) drehfest verbunden zu werden,
**dadurch gekennzeichnet,**
**dass** der Außenteil (135) drehfest mit der der Nabe (21) zugewandten Axialseite (115) des Motorgehäuses (111) verbunden ist, wodurch sich der Belastungsmotor (110) am Abstellmodul (130) abstützt und
wobei ein Verdrehen des Innenteils (136) gegen den Außenteil (135) blockierbar ist.

2. Prüfstand (100) nach Anspruch 1,
**dadurch gekennzeichnet, dass** die der Nabe (21) zugewandte Axialseite (115) des Motorgehäuses (11) und das mindestens eine Abstellmodul (130) dazu ausgebildet sind, über einen Ringkörper (113) drehfest miteinander verbunden zu werden.

3. Prüfstand (100) nach mindestens einem der Ansprüche 1 und 2,
**dadurch gekennzeichnet, dass** der Ringkörper (113) unlösbar mit dem Motorgehäuse (111) oder unlösbar mit dem Abstellmodul (130) verbunden ist.

4. Prüfstand (100) nach mindestens einem der Ansprüche 1 bis 3,
**dadurch gekennzeichnet, dass** das mindestens eine Abstellmodul (130) eine konzentrische Öffnung (131) aufweist, über welche die Nabe (21) von einer dem mindestens einen Belastungsmotor (110) zugewandten Seite aus zugänglich ist.

5. Prüfstand (100) nach Anspruch 1,
**dadurch gekennzeichnet, dass** die Motorwelle (112) drehfest mit dem Innenteil (136) verbindbar ist.

6. Prüfstand (100) nach mindestens einem der Ansprüche 1 bis 5,
**dadurch gekennzeichnet, dass** auf dem mindestens einen Abstellmodul (130) ein Luftreifen (138) angeordnet ist.

7. Prüfstand (100) nach mindestens einem der Ansprüche 1 bis 5,
**dadurch gekennzeichnet, dass** auf dem mindestens einen Abstellmodul (130) eine Gummibeschichtung (139) angeordnet ist.

8. Prüfstand (100) nach Anspruch 1 bis 7,
**dadurch gekennzeichnet, dass** das mindestens eine Abstellmodul (130) kraftschlüssig oder formschlüssig mit einem Untergrund verbindbar ist.

9. Prüfstand (100) nach Anspruch 1 bis 8,
**dadurch gekennzeichnet, dass** der mindestens eine Belastungsmotor (110) als permanenterregter Synchronmotor (110) ausgebildet ist.

10. Prüfstand (100) nach mindestens einem der Ansprüche 1 bis 9,
**dadurch gekennzeichnet, dass** der mindestens eine Belastungssensor (120) als Drehmomentsensor (120) und/oder als Kraftsensor ausgebildet ist.

11. Prüfstand (100) nach mindestens einem der Ansprüche 1 bis 10,
**dadurch gekennzeichnet, dass** der Prüfstand (100) weiterhin mindestens eine Motorstütze (118) umfasst, welche dazu ausgebildet ist, ein Kippmoment des mindestens einen Belastungsmotors (110) abzustützen.

12. Prüfstand (100) nach mindestens einem der Ansprüche 1 bis 11,
**dadurch gekennzeichnet, dass** der Prüfstand (100) weiterhin mindestens einen Abstützstempel (133) umfasst, wobei der Abstützstempel (133) in drei Raumrichtungen verstellbar und/oder um drei Achsen verdrehbar ist und wobei der Abstützstempel (133) dazu ausgebildet ist, das Abstellmodul (130) abzustützen oder
dass der Prüfstand (100) weiterhin mindestens eine hexapodenartige Aktuatorvorrichtung umfasst, wobei die Aktuatorvorrichtung dazu ausgebildet ist, die Nabe in drei Raumrichtungen zu verstellen und/oder um drei Achsen zu verdrehen.

13. Prüfstand (100) nach mindestens einem der Ansprüche 1 bis 12,
**dadurch gekennzeichnet, dass** der Prüfstand (100) für jedes antreibbare Rad des Kraftfahrzeugs (20) jeweils einen Belastungsmotor (110), jeweils einen Belastungssensor (120) und jeweils ein Abstellmodul (130) umfasst.

## Claims

1. Test stand (100) for a drive train of a motor vehicle (20), comprising at least one load motor (110) having a motor housing (111) and a motor shaft (112), at least one load sensor (120) and at least one parking module (130), the motor shaft (112) being designed to be drivingly connected to a hub (21) of the motor vehicle (20),
the load sensor (120) being designed to detect a load transmitted by the motor shaft (112) to the hub (21),
an axial side (115) of the motor housing (11) facing the hub (21) and the at least one parking module (130) being designed to be connected to each other for conjoint rotation,
the load sensor (120) being positioned axially between the motor shaft (112) and the hub (21) on an axial side (116) of the motor housing (111) facing the hub (21),
the at least one parking module (130) having a radial outer part (135) and a radial inner part (136),
the inner part (136) being held rotatably in the outer part (135) and
the inner part (136) being designed to be connected to the hub (21) of the motor vehicle (20) for conjoint rotation,
**characterized in that**,
the outer part (135) is connected to the axial side (115) of the motor housing (111) facing the hub (21) for conjoint rotation, as a result of which the load motor (110) is supported on the parking module (130) and
a rotation of the inner part (136) against the outer part (135) can be blocked.

2. Test stand (100) according to Claim 1,
**characterized in that** the axial side (115) of the motor housing (11) facing the hub (21) and the at least one parking module (130) are designed to be connected to each other for conjoint rotation via an annular body (113),

3. Test stand (100) according to at least one of Claims 1 and 2,
**characterized in that** the annular body (113) is permanently connected to the motor housing (111) or permanently connected to the parking module (130).

4. Test stand (100) according to at least one of Claims 1 to 3,
**characterized in that** the at least one parking module (130) has a concentric opening (131) via which the hub (21) is accessible from a side facing the at least one load motor (110).

5. Test stand (100) according to Claim 1,
**characterized in that** the motor shaft (112) can be connected to the inner part (136) for conjoint rotation.

6. Test stand (100) according to at least one of Claims 1 to 5,
**characterized in that** a pneumatic tyre (138) is positioned on the at least one parking module (130).

7. Test stand (100) according to at least one of Claims 1 to 5,
**characterized in that** a rubber coating (139) is positioned on the at least one parking module (130).

8. Test stand (100) according to Claims 1 to 7, **characterized in that** the at least one parking module (130) can be connected to a base in a force-fitting or form-fitting manner.

9. Test stand (100) according to Claims 1 to 8, **characterized in that** the at least one load motor (110) is designed as a permanently excited synchronous motor (110) .

10. Test stand (100) according to at least one of Claims 1 to 9,
**characterized in that** the at least one load sensor (120) is designed as a torque sensor (120) and/or as a force sensor.

11. Test stand (100) according to at least one of Claims 1 to 10,
**characterized in that** the test stand (100) further comprises at least one motor support (118) which is designed to support a tipping moment of the at least one load motor (110).

12. Test stand (100) according to at least one of Claims 1 to 11,
**characterized in that** the test stand (100) further comprises at least one support ramp (133), the support ramp (133) being adjustable in three spatial directions and/or rotatable about three axes and the support ramp (133) being designed to support the parking module (130) or
**in that** the test stand (100) further comprises at least one hexapod-like actuator device, the actuator device being designed to adjust the hub in three spatial directions and/or rotate it about three axes.

13. Test stand (100) according to at least one of Claims 1 to 12,
**characterized in that** the test stand (100) comprises a load motor (110), a load sensor (120) and a parking module (130) for each drivable wheel of the motor vehicle (20).

## Revendications

1. Banc d'essai (100) pour une chaîne cinématique d'un véhicule automobile (20), comprenant au moins un moteur de charge (110) avec un boîtier de moteur (111) et un arbre de moteur (112), au moins un capteur de charge (120) et au moins un module d'arrêt (130),
l'arbre de moteur (112) étant conçu pour être relié de manière entraînante à un moyeu (21) du véhicule automobile (20),
le capteur de charge (120) étant conçu pour détecter une charge transmise par l'arbre de moteur (112) sur le moyeu (21),
un côté axial (115) du boîtier de moteur (11) tourné vers le moyeu (21) et ledit au moins un module d'arrêt (130) étant conçus pour être reliés entre eux de manière solidaire en rotation,
le capteur de charge (120) étant agencé sur un côté axial (116) du boîtier de moteur (111) tourné vers le moyeu (21), de manière axiale entre l'arbre de moteur (112) et le moyeu (21),
ledit au moins un module d'arrêt (130) comprenant une partie radiale externe (135) et une partie radiale interne (136),
la partie interne (136) étant maintenue de manière rotative dans la partie externe (135) et
la partie interne (136) étant conçue pour être reliée de manière solidaire en rotation au moyeu (21) du véhicule automobile (20),
**caractérisé**
**en ce que** la partie externe (135) est reliée de manière solidaire en rotation au côté axial (115) du boîtier de moteur (111) tourné vers le moyeu (21), le moteur de charge (110) s'appuyant ainsi sur le module d'arrêt (130) et
une rotation de la partie interne (136) par rapport à la partie externe (135) étant apte à être bloquée.

2. Banc d'essai (100) selon la revendication 1, **caractérisé en ce que** le côté axial (115) du boîtier de moteur (11) tourné vers le moyeu (21) et ledit au moins un module d'arrêt (130) sont conçus pour être reliés entre eux de manière solidaire en rotation par l'intermédiaire d'un corps annulaire (113).

3. Banc d'essai (100) selon au moins une des revendications 1 et 2,
**caractérisé en ce que** le corps annulaire (113) est relié de manière inamovible au boîtier de moteur (111) ou de manière inamovible au module d'arrêt (130).

4. Banc d'essai (100) selon au moins une des revendications 1 à 3,
**caractérisé en ce que** ledit au moins un module d'arrêt (130) comprend une ouverture concentrique (131) par laquelle le moyeu (21) est accessible depuis un côté tourné vers ledit au moins un moteur de charge (110).

5. Banc d'essai (100) selon la revendication 1, **caractérisé en ce que** l'arbre de moteur (112) est apte à être relié de manière solidaire en rotation à la partie interne (136).

6. Banc d'essai (100) selon au moins une des revendications 1 à 5,
**caractérisé en ce qu'**un pneumatique (138) est agencé sur ledit au moins un module d'arrêt (130).

7. Banc d'essai (100) selon au moins une des revendications 1 à 5,
**caractérisé en ce qu'**un revêtement en caoutchouc (139) est agencé sur ledit au moins un module d'arrêt (130).

8. Banc d'essai (100) selon les revendications 1 à 7, **caractérisé en ce que** ledit au moins un module d'arrêt (130) est apte à être relié à un sol par liaison par force ou par complémentarité de forme.

9. Banc d'essai (100) selon les revendications 1 à 8, **caractérisé en ce que** ledit au moins un moteur de charge (110) est conçu sous la forme d'un moteur synchrone à excitation permanente (110).

10. Banc d'essai (100) selon au moins une des revendications 1 à 9,
**caractérisé en ce que** ledit au moins un capteur de charge (120) est conçu sous la forme d'un capteur de couple (120) et/ou sous la forme d'un capteur de force.

11. Banc d'essai (100) selon au moins une des revendications 1 à 10,
**caractérisé en ce que** le banc d'essai (100) comprend en outre au moins un support de moteur (118) qui est conçu pour supporter un moment de basculement dudit au moins un moteur de charge (110).

12. Banc d'essai (100) selon au moins une des revendications 1 à 11,
**caractérisé en ce que** le banc d'essai (100) comprend en outre au moins un poussoir de support (133), le poussoir de support (133) étant réglable dans trois directions spatiales et/ou étant apte à tourner autour de trois axes, et le poussoir de support (133) étant conçu pour soutenir le module d'arrêt (130) ou
**en ce que** le banc d'essai (100) comprend en outre au moins un dispositif d'actionnement de type hexapode, le dispositif d'actionnement étant conçu pour régler le moyeu dans trois directions spatiales et/ou pour le faire tourner autour de trois axes.

13. Banc d'essai (100) selon au moins une des revendications 1 à 12,
**caractérisé en ce que** le banc d'essai (100) comprend pour chaque roue motrice du véhicule automobile (20) respectivement un moteur de charge (110), respectivement un capteur de charge (120) et respectivement un module d'arrêt (130).
